(19) **Europäisches Patentamt**
**European Patent Office**
**Office européen des brevets**

(11) **EP 2 938 002 B1**

(12) # FASCICULE DE BREVET EUROPEEN

(45) Date de publication et mention
de la délivrance du brevet:
**19.10.2016 Bulletin 2016/42**

(51) Int Cl.:
*H04B 1/69* (2006.01)    *H04B 1/7073* (2011.01)
*H04L 25/49* (2006.01)

(21) Numéro de dépôt: **15157575.0**

(22) Date de dépôt: **04.03.2015**

(54) **Dispositif et méthode de détermination du temps d'arrivée d'un signal UWB**

Vorrichtung und Verfahren zur Bestimmung der Eingangszeit eines UWB-Signals

Device and method for determining the time of arrival of a UWB signal

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.04.2014 FR 1453765**

(43) Date de publication de la demande:
**28.10.2015 Bulletin 2015/44**

(73) Titulaire: **Commissariat à l'Énergie Atomique
et aux Énergies Alternatives
75015 Paris (FR)**

(72) Inventeurs:
• **Morche, Dominique
38240 Meylan (FR)**
• **Bautista Delgado, Alfredo-Farid
38000 Grenoble (FR)**

(74) Mandataire: **Brevalex
56, Boulevard de l'Embouchure
B.P. 27519
31075 Toulouse Cedex 2 (FR)**

(56) Documents cités:
• **MORCHE DOMINIQUE ET AL:
"Double-Quadrature UWB Receiver for
Wide-Range Localization Applications With
Sub-cm Ranging Precision", IEEE JOURNAL OF
SOLID-STATE CIRCUITS, IEEE SERVICE
CENTER, PISCATAWAY, NJ, USA, vol. 48, no. 10,
1 octobre 2013 (2013-10-01), pages 2351-2362,
XP011527452, ISSN: 0018-9200, DOI:
10.1109/JSSC.2013.2272352 [extrait le
2013-09-20]**
• **MASSON G ET AL: "A 1 nJ/b 3.2-to-4.7 GHz UWB
50 Mpulses/s double quadrature receiver for
communication and localization", ESSCIRC,
2010 PROCEEDINGS OF THE, IEEE,
PISCATAWAY, NJ, USA, 14 septembre 2010
(2010-09-14), pages 502-505, XP031788418, ISBN:
978-1-4244-6662-7**

**Description**

## DOMAINE TECHNIQUE

La présente invention concerne le domaine des récepteurs UWB *(Ultra Wide Band)*. Elle concerne à la fois les systèmes de télécommunication UWB et les systèmes de mesure de distance utilisant un signal UWB.

## ÉTAT DE LA TECHNIQUE ANTÉRIEURE

Les systèmes de télécommunication ultra-large bande ou UWB de type impulsionnel sont bien connus de l'état de la technique. Dans un tel système, un symbole émis par un émetteur est transmis à l'aide d'une séquence d'impulsions ultra-courtes, de l'ordre de la nanoseconde ou de la centaine de picosecondes.

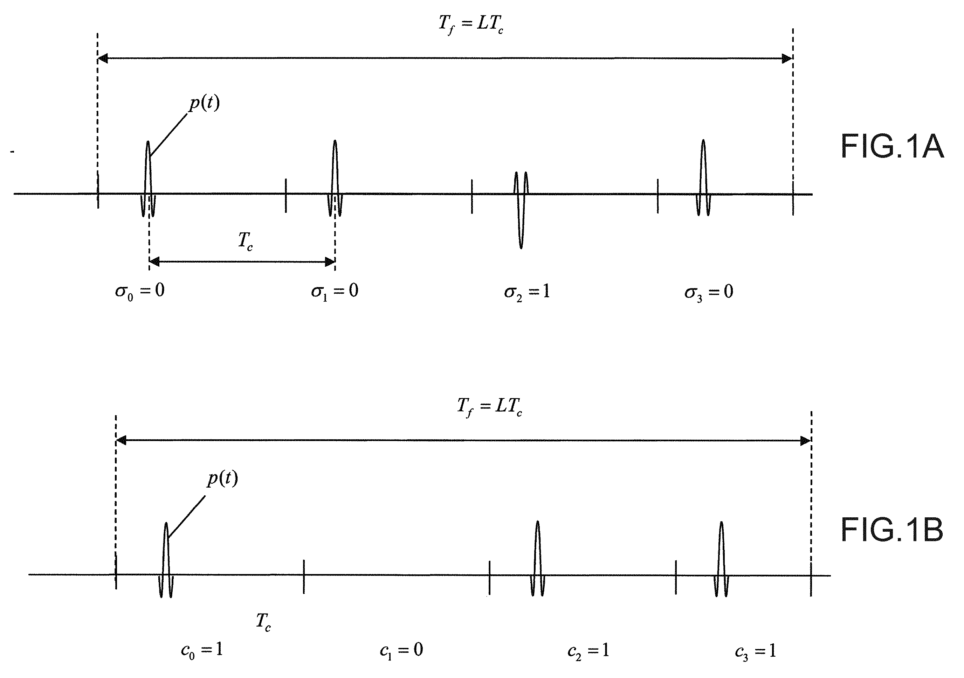

La Figure 1A illustre schématiquement le signal émis par un émetteur UWB, correspondant à un symbole d'information donné. Ce signal est constitué d'impulsions se répétant avec une période de répétition $T_c$.

Le signal émis par l'émetteur, en absence de modulation par des symboles de modulation, peut s'exprimer sous la forme suivante :

$$s_{Tx}(t) = \sum_{k=0}^{L-1} (-1)^{\sigma_k} p(t - kT_c) \cos\left(2\pi f_0 \left(t - kT_c\right) + \varphi_0\right) \qquad (1)$$

où $p(t)$ est la forme de l'impulsion élémentaire en bande de base, $f_0$ est la fréquence porteuse, $\varphi_0$, la phase à l'origine, et $T_c$ est la période de répétition, et $\sigma = \sigma_0,...,\sigma_{L-1}$ est une séquence binaire pseudo-aléatoire. La durée $\tau$ de l'impulsion élémentaire $p(t)$ est nettement inférieure à la durée de la période $T_c$.

Ce signal de base peut être modulé en amplitude et/ou en position pour transmettre un symbole de modulation par trame constituée par un nombre donné de périodes de répétition. La trame est de durée $T_f = L T_c$ où $L$ est le nombre de périodes dans la trame. Par exemple si la modulation est une modulation de position (PPM pour *Pulse Position Modulation),* le signal modulé peut s'exprimer sous la forme :

$$s_{Tx}(t) = \sum_{k=0}^{L-1} (-1)^{\sigma_k} p(t - kT_c - m\varepsilon) \cos\left(2\pi f_0 \left(t - kT_c - m\varepsilon\right) + \varphi_0\right) \qquad (2)$$

où $\varepsilon$ est un retard de modulation sensiblement inférieur à la période $T_c$ et $m = 0,..,M - 1$ donne la valeur du symbole PPM, autrement dit sa position temporelle. L'alphabet de modulation PPM est ici constitué par $\delta(t-m\varepsilon),$ avec m $=0,..,M$ -1 où $\delta$ est le symbole de Dirac.

De manière similaire, un symbole peut être transmis par l'émetteur UWB au moyen d'une modulation d'amplitude ou en phase auquel le signal modulé peut s'exprimer alors sous la forme :

$$s_{Tx}(t) = \sum_{k=0}^{L-1} a_m (-1)^{\sigma_k} p(t - kT_c) \cos\left(2\pi f_0 \left(t - kT_c\right) + \varphi_0\right) \qquad (3)$$

où $a_m$ est le symbole à transmettre, par exemple un symbole PAM *(Pulse Amplitude Modulation)* ou (D)BPSK *(Differential) Binary Phase Shift Keying).*

Pour séparer les transmissions de différents émetteurs, on peut prévoir que chaque émetteur est associé à un code de sauts *temporels* $c_k$ *(time hopping code),* $k=0,...,L-1$, $c_k \in \{0,...,L-1\}$ donné, étant entendu que les codes relatifs à différents émetteurs sont orthogonaux.

La Fig. 1B illustre le signal non modulé d'un émetteur utilisant un code de sauts temporels. Pour simplifier, on a supposé ici que les éléments $\sigma_k$ de la séquence pseudo-aléatoire étaient tous égaux à 1.

Lorsqu'il est modulé par une modulation en position ou en modulation d'amplitude, le signal émis s'écrit alors respectivement comme :

$$s_{Tx}(t) = \sum_{k=0}^{L-1} p(t - c_k T_c - m\varepsilon)\cos\left(2\pi f_0\left(t - kT_c - m\varepsilon\right) + \varphi_0\right) \qquad (4)$$

et

$$s_{Tx}(t) = a_m \sum_{k=0}^{L-1} p(t - c_k T_c)\cos\left(2\pi f_0\left(t - kT_c\right) + \varphi_0\right) \qquad (5)$$

Dans certains types de récepteur ou lorsque l'on souhaite procéder à une mesure de distance, le récepteur doit déterminer précisément les temps d'arrivée des impulsions UWB reçues. En effet, le récepteur ne sait généralement pas *a priori* dans quelles fenêtres temporelles apparaissent les impulsions UWB (absence de référence de synchronisation et, le cas échéant, ignorance du code de sauts temporels utilisés). De surcroît, lorsqu'une modulation PPM (*Pulse Position* Modulation) est utilisée, le temps d'arrivée de l'impulsion est porteur de l'information de modulation et doit donc être déterminé précisément.

Par ailleurs, la très faible durée d'impulsion des signaux UWB impulsionnels en fait d'excellents candidats pour la mesure de distance et la radiolocalisation. Quel que soit le principe du système de mesure de distance (temps de propagation aller-retour par exemple) ou de radiolocalisation envisagé (différence de temps de propagation par exemple), il est indispensable de pouvoir déterminer précisément le temps d'arrivée d'une impulsion UWB.

Une première méthode de détermination du temps d'arrivée d'une impulsion UWB consiste à effectuer une intégration du signal reçu, après translation en bande de base, dans une pluralité de fenêtres temporelles consécutives.

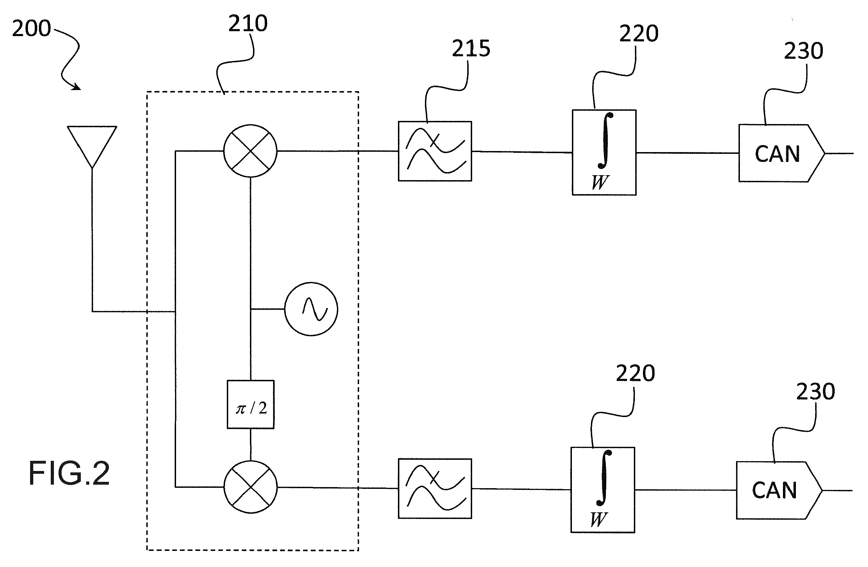

La Fig. 2 décrit un récepteur UWB, 200, utilisé par cette méthode de détermination de temps d'arrivée.

Il comprend un étage de conversion de fréquence pour translater le signal en bande de base, 210, d'un étage de filtrage passe-bas 215, suivi, pour chacune des voies I et Q, d'un intégrateur dans une fenêtre temporelle, 220 (ou dans une pluralité de fenêtres temporelles distribuée selon les positions temporelles relatives des impulsions attendues). Les fenêtres temporelles se succèdent à une fréquence F, et les résultats d'intégration sur les deux voies font l'objet d'une conversion analogique-numérique dans l'étage de conversion 230.

Toutefois, pour obtenir une précision élevée de temps d'arrivée, avec une largeur d'impulsion relativement brève, il est nécessaire de choisir des fenêtres dont la durée est courte. On doit donc effectuer un grand nombre d'intégrations (sur un grand nombre de de fenêtres), ce qui conduit à un débit très élevé en sortie de l'étage de conversion.

L'article de MORCHE DOMINIQUE ET AL: "Double-Quadrature UWB Receiver for Wide-Range Localization Applications With Sub-cm Ranging Precision", IEEE JOURNAL OF SOLID-STATE CIRCUITS, IEEE SERVICE CENTER, PISCATAWAY, NJ, USA, vol. 48, no. 10, 1 octobre 2013 décrit un récepteur pour l'estimation de temps d'arrivée d'une impulsion UWB comprise dans un signal RF, ladite impulsion UWB étant modulée à une fréquence porteuse. Le récepteur comprend un premier étage de translation de fréquence I et Q pour ramener le signal en bande de base, un étage de filtrage suivi, pour chacune des voies I et Q, d'un étage de corrélation avec deux sinusoïdes basse fréquence en quadrature. Chaque mélangeur en quadrature comprend un premier mélangeur élémentaire avec un premier signal de la base (cosinusoïdal) et un second mélangeur élémentaire avec un second signal de la base (sinusoïdal), orthogonal au premier. Les signaux obtenus par projection sont intégrés à l'intérieur d'une fenêtre temporelle de détection, au moyen d'intégrateurs. Le cas échéant, les résultats d'intégration sont accumulés sur une pluralité de fenêtres temporelles.

La demande de brevet EP-A-1580901 propose une méthode de détection du temps d'arrivée d'une impulsion à l'intérieur d'une fenêtre temporelle qui permet d'utiliser une fenêtre de durée plus importante et donc ne nécessite pas d'effectuer un grand nombre d'intégrations.

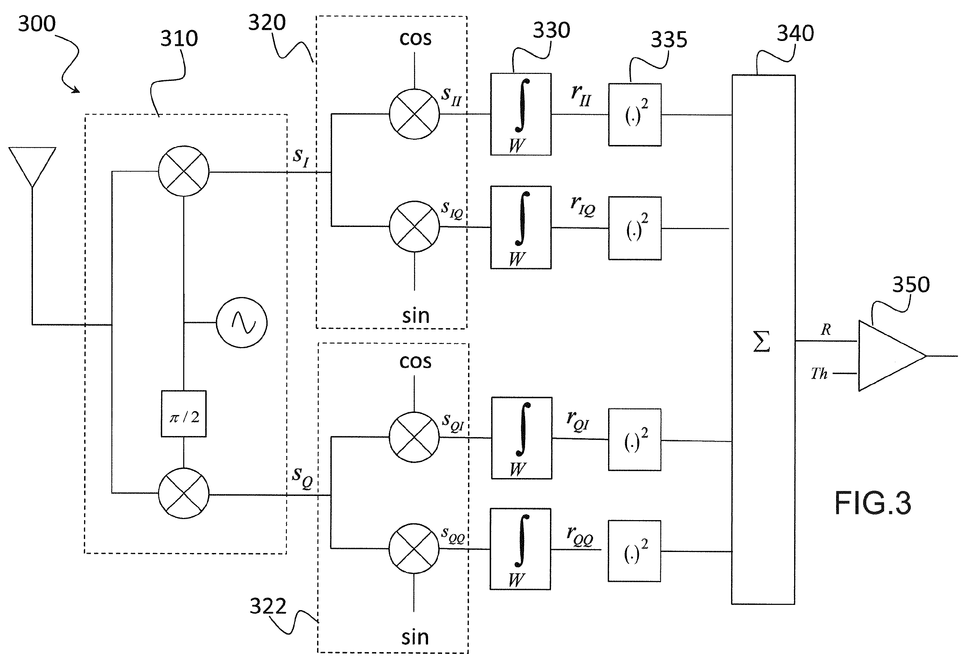

Le principe de cette méthode est illustré en Fig. 3. Elle utilise un récepteur UWB, 300, comprenant un premier étage de translation de fréquence pour ramener le signal en bande de base, 310, d'un étage de filtrage passe-bande ou passe-bas (non représenté) suivi, pour chacune des voies I et Q, d'un étage de corrélation avec deux sinusoïdes basse fréquence en quadrature. Plus précisément, le mélangeur en quadrature 320 effectue une projection du signal en phase, noté $s_I$, sur une base constituée de deux sinusoïdes orthogonales basse fréquence. De manière similaire, le mélangeur en quadrature 322 effectue une projection du signal en quadrature sur cette même base. Chaque mélangeur en quadrature comprend un premier mélangeur élémentaire avec un premier signal de la base (ici un signal cosinusoïdal) et un second mélangeur élémentaire avec un second signal de la base (ici un signal sinusoïdal), orthogonal au premier. Les signaux obtenus par projection, notés $s_{II}, s_{IQ}$ pour la voie I et $s_{QI}, s_{QQ}$ pour la voie Q, sont intégrés à l'intérieur d'une fenêtre temporelle de détection, au moyen des intégrateurs 330. Le cas échéant, les résultats d'intégration sont accumulés sur une pluralité de fenêtres temporelles, séparées par la période de répétition du signal UWB ou bien décalées selon un code de sauts temporels. Les signaux intégrés sont sommés quadratiquement en 335, 340 et la somme ainsi obtenue est comparée à une valeur de seuil en 350. Si la somme obtenue excède la valeur de seuil, le récepteur conclut qu'une impulsion a été reçue dans la fenêtre temporelle. L'architecture du récepteur UWB 300 est dite à double quadrature.

Le récepteur UWB à double quadrature permet de localiser une impulsion UWB dans la fenêtre temporelle de détection.

L'article de G. Masson et al. intitulé « A 1 nJ/b 3.2 to 4.7 GHz UWB 50 Mpulses/s double quadrature receiver for communication and localization » publié dans Proc. of the ESSCIRC 2010, 14-16 Sept. 2010, pp. 502-505, décrit l'architecture récepteur à double quadrature et mentionne la possibilité d'utiliser les signaux de corrélation avec les sinusoïdes basse fréquence pour déduire le temps d'arrivée (ToA) de l'impulsion UWB dans la fenêtre temporelle de détection.

L'architecture à double quadrature présente toutefois des inconvénients.

Tout d'abord, cette architecture est complexe dans la mesure où elle nécessite deux mélangeurs en quadrature supplémentaires (par rapport à une architecture d'un récepteur UWB conventionnel) pour effectuer la projection sur la base orthogonale. En outre, cette architecture nécessite deux fois plus d'intégrateurs et de convertisseurs analogique/numérique, d'où une consommation d'énergie accrue. De surcroît, cette architecture dégrade le rapport signal sur bruit du récepteur.

Ensuite cette architecture n'est pas compatible avec l'architecture d'un récepteur UWB conventionnel.

Enfin, l'étage de projection orthogonale qui nécessite des mélangeurs relativement linéaires dégrade le facteur de bruit (*noise figure*) du récepteur à cause du bruit supplémentaire généré par les mélangeurs. Le rapport signal sur bruit en sortie du récepteur est plus faible et la sensibilité du récepteur est par conséquent dégradée, ce d'autant plus que la largeur de la fenêtre temporelle est plus grande.

Le but de la présente invention est par conséquent de proposer une méthode et un dispositif de détermination du temps d'arrivée d'un signal UWB qui ne requièrent pas d'architecture sensiblement plus complexe qu'un récepteur UWB conventionnel, tout en garantissant une grande précision de mesure.

## EXPOSÉ DE L'INVENTION

La présente invention est définie par un dispositif de détermination du temps d'arrivée d'un signal UWB comprenant au moins une impulsion modulée à une fréquence porteuse, ledit dispositif comprenant :

- au moins un étage de translation à une fréquence intermédiaire comprenant un mélangeur en quadrature comprenant deux voies de mélange I et Q;
- au moins un étage d'intégration relié à un étage de translation, pour intégrer les signaux délivrés sur les voies I et Q sur une fenêtre temporelle et fournir respectivement des résultats d'intégrations pour chacune des voies I et Q; et
- des moyens de commande desdits au moins un étage de translation et d'intégration pour:

  ○ réaliser une première translation de fréquence du signal UWB à une première fréquence intermédiaire suivie d'une intégration du signal ainsi translaté sur une première fenêtre temporelle pour obtenir des premiers résultats d'intégration $r_I^1, r_Q^1$ ;

  ○ réaliser une seconde translation de fréquence du signal UWB à une seconde fréquence intermédiaire, différente de la première fréquence intermédiaire, suivie d'une intégration du signal ainsi translaté sur une seconde fenêtre temporelle pour obtenir des seconds résultats d'intégration $r_I^2, r_Q^2$ ;

- des moyens de calcul pour calculer une première valeur de phase $\Theta^1$ à partir des premiers résultats d'intégration selon $\Theta^1 = Arc\tan\left(\dfrac{r_Q^1}{r_I^1}\right)$, une seconde valeur de phase $\Theta^2$ à partir des seconds résultats d'intégration selon

  $\Theta^2 = Arc\tan\left(\dfrac{r_Q^2}{r_I^2}\right)$ et en déduire un écart de phase $\Delta\Theta = \Theta^2 - \Theta^1$, lesdits moyens de calcul déterminant le temps d'arrivée du signal UWB à partir de l'écart de phase ainsi obtenu au moyen d'une fonction prédéterminée.

Selon un premier mode de réalisation, les première et seconde fenêtres temporelles sont confondues en une fenêtre unique et que celle-ci est choisie pour contenir ladite impulsion.

Dans ce cas, ledit temps d'arrivée, compté à partir du début de la fenêtre unique, est estimé par :

$$t_a = \frac{\Delta\Theta}{2\pi(\Delta f_2 - \Delta f_1)}$$

où $\Delta\Theta$ est l'écart de phase, $\Delta f_1$ est la première fréquence intermédiaire et $\Delta f_2$ est la seconde fréquence intermédiaire.

Selon un second mode de réalisation, ledit signal UWB comprend une première impulsion suivie d'une seconde impulsion, que la première fenêtre temporelle est choisie pour comprendre la première impulsion et la seconde fenêtre temporelle est choisie pour comprendre la seconde impulsion.

Dans ce cas, ledit temps d'arrivée, compté à partir du début de la première fenêtre temporelle est estimé par :

$$t_a = \frac{\Delta\Theta - 2\pi f_0 \Delta t_i - 2\pi \Delta f_2 \delta t_{21}}{2\pi(\Delta f_2 - \Delta f_1)}$$

où $\Delta\Theta$ est l'écart de phase, $f_0$ est la fréquence porteuse, $\Delta f_1$ est la première fréquence intermédiaire, $\Delta f_2$ est la seconde fréquence intermédiaire, $\Delta t_i$ est l'intervalle de temps séparant les deux impulsions, $\delta t_{21} = \Delta t_i - \Delta t_w$ où $\Delta t_w$ est l'intervalle de temps séparant les première et seconde fenêtres temporelles.

L'invention concerne également un dispositif de détermination du temps d'arrivée d'un signal UWB comprenant une première impulsion modulée à une fréquence porteuse, suivie d'une seconde impulsion modulée à une seconde fréquence porteuse, ledit dispositif comprenant :

- un étage de translation à une fréquence intermédiaire comprenant un mélangeur en quadrature comprenant deux voies de mélange I et Q;
- un étage d'intégration relié au dit étage de translation, pour intégrer les signaux délivrés sur les voies I et Q sur une fenêtre temporelle et fournir respectivement des résultats d'intégrations pour chacune des voies I et Q; et
- des moyens de commande de l'étage de translation et de l'étage d'intégration pour:

  ◦ réaliser une première translation de fréquence du signal UWB à une fréquence intermédiaire suivie d'une intégration du signal ainsi translaté sur une première fenêtre temporelle pour obtenir des premiers résultats d'intégration $r_I^1, r_Q^1$ ;

  ◦ réaliser une seconde translation de fréquence du signal UWB à ladite fréquence intermédiaire, suivie d'une intégration du signal ainsi translaté sur une seconde fenêtre temporelle pour obtenir des seconds résultats d'intégration $r_I^2, r_Q^2$ ;

- des moyens de calcul pour calculer une première valeur de phase $\Theta^1$ à partir des premiers résultats d'intégration

  selon $\Theta^1 = Arc\tan\left(\frac{r_Q^1}{r_I^1}\right)$, une seconde valeur de phase $\Theta^2$ à partir des seconds résultats d'intégration selon

  $\Theta^2 = Arc\tan\left(\frac{r_Q^2}{r_I^2}\right)$ et en déduire un écart de phase $\Delta\Theta = \Theta^2 - \Theta^1$, lesdits moyens de calcul déterminant le temps d'arrivée du signal UWB à partir de l'écart de phase ainsi obtenu au moyen d'une fonction prédéterminée.

La fréquence intermédiaire peut être par exemple la fréquence médiane entre les première et seconde fréquences porteuses.

Avantageusement, l'intervalle de temps entre les première et seconde fenêtres temporelles est choisi égal à l'intervalle de temps entre les première et seconde impulsions, le temps d'arrivée du signal UWB, compté à partir du début de la première fenêtre temporelle étant alors estimé par :

$$t_a = t_a^{min} + \frac{\Delta\Theta - \Delta\Theta_{min}}{\Delta\Theta_{max} - \Delta\Theta_{min}} \Delta T$$

où $\Delta\Theta_{min}$ et $\Delta\Theta_{max}$ sont respectivement des écarts de phase obtenus pour un premier temps d'arrivée $t_a^{min}$ et un second temps d'arrivée $t_a^{\max}$ , et $\Delta T = t_a^{\max} - t_a^{\min}$ .

Ladite fonction prédéterminée peut être donnée par une courbe de calibration fournissant l'écart de phase en fonction du temps d'arrivée du signal.

Cette courbe peut être obtenue au moyen d'une statistique des valeurs d'écarts de phase en fonction du temps d'arrivée du signal, en absence de synchronisation de l'émetteur et du récepteur.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1A, déjà décrite, représente un exemple de signal UWB de type impulsionnel ;
La Fig. 1B, déjà décrite, représente un exemple de signal UWB de type impulsionnel codé par un code de sauts temporels ;
La Fig. 2, déjà décrite, représente de manière schématique la structure d'un premier récepteur UWB permettant de détecter la présence d'une impulsion UWB dans une fenêtre temporelle ;
La Fig. 3, déjà décrite, représente de manière schématique la structure d'un second récepteur UWB permettant de détecter la présence d'une impulsion UWB dans une fenêtre temporelle ;
La Fig. 4 représente de manière schématique la structure d'un dispositif selon un mode de réalisation de l'invention ;
La Fig. 5A représente un exemple de variation de phase, pour deux impulsions de fréquences distinctes, sur une plage de temps d'arrivée ;
La Fig. 5B représente un écart entre des variations de phase de la Fig. 5A sur la même plage de temps d'arrivée ;
La Fig. 5C représente un autre exemple d'écart entre des variations de phase relatives à deux impulsions de fréquences distinctes.

## EXPOSÉ DÉTAILLÉ DE MODES DE RÉALISATION PARTICULIERS

Nous considérerons dans la suite un récepteur destiné à recevoir un signal UWB impulsionnel. Ce signal impulsionnel, peut être codé par un code de sauts temporels ou non, non modulé ou bien modulé par des symboles de modulation appartenant à un alphabet de modulation en position, en amplitude, en phase ou autre, comme exposé dans la partie introductive. Sans perte de généralité, nous supposerons dans la suite que le signal impulsionnel est non-modulé.

Une impulsion du signal impulsionnel peut s'écrire généralement sous la forme :

$$P(t) = A.\cos\left(2\pi f_o \left(t - t_i\right) + \varphi\right) G(t) \tag{6}$$

où $G(t)$ est l'enveloppe de l'impulsion, généralement modélisée par une fonction gaussienne, soit :

$$G(t) = \exp\left(-\left(\frac{t - t_{peak}}{\tau}\right)^2\right) \tag{7}$$

où $A$ est l'amplitude de l'impulsion émise, $f_0$ est la fréquence porteuse (ou fréquence centrale), $t_{peak}$ est l'instant où l'enveloppe est maximale, $\tau$ est un paramètre définissant la bande passante de l'impulsion, $t_i$ est le temps d'émission et $\varphi$ est la phase du signal au moment de son émission.

Le signal reçu par le récepteur, après un temps de propagation $t_d$ peut s'écrire :

$$R(t) = A.\cos\left(2\pi f_o \left(t - t_i - t_d\right) + \varphi\right) \exp\left(-\left(\frac{t - t_{peak} - t_d}{\tau}\right)^2\right) \tag{8}$$

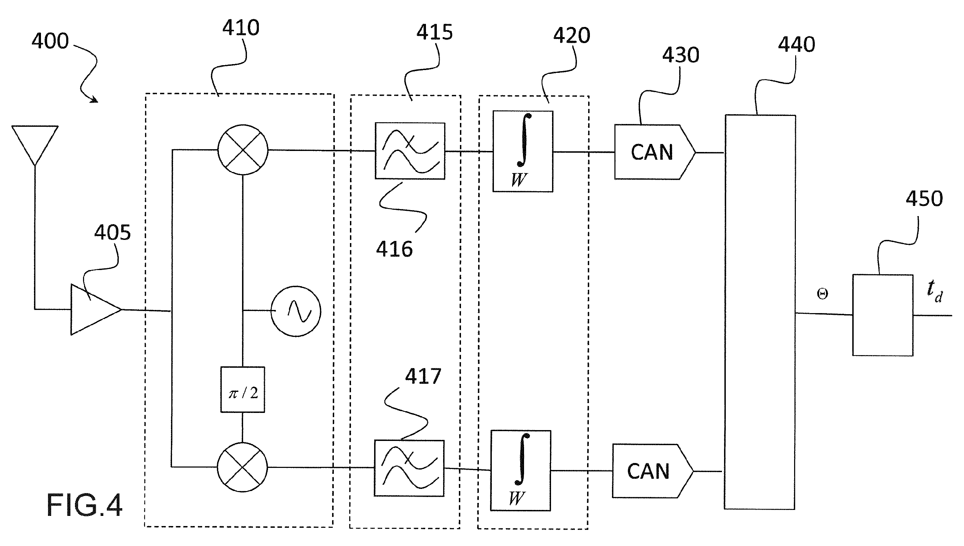

La Fig. 4 représente un dispositif selon un mode de réalisation de l'invention. Ce dispositif est un récepteur UWB présentant une structure à un seul étage de mélange, tout comme le récepteur de la Fig. 2. Plus précisément, le récepteur comprend un filtre RF (non représenté), un amplificateur bas bruit, 405, suivi d'un étage de translation à une fréquence intermédiaire, 410, un étage de filtrage passe-bande ou passe-bas (la variante passe-bas a été représentée sur la figure), 415, un étage d'intégration sur une fenêtre temporelle, 420, et un étage de conversion analogique-numérique, 430.

Toutefois, à la différence du récepteur de la Fig. 2, les échantillons des voies I et Q, en sortie de l'étage de conversion, sont fournis à un module d'estimation d'écart de phase (premiers moyens de calcul), 440.

Le temps d'arrivée du signal UWB est ensuite obtenu à partir de l'écart de phase ainsi estimé, par des seconds moyens de calcul, 450, comme expliqué ci-après.

L'étage de translation en fréquence est adapté à effectuer une première translation en fréquence à une première fréquence intermédiaire, $\Delta f_1$, et une seconde translation en fréquence à une seconde fréquence intermédiaire, $\Delta f_2$. Par exemple, si le signal impulsionnel contient des impulsions à une fréquence porteuse, $f_0$, l'étage de translation de fréquence pourra effectuer un premier mélange en quadrature avec un oscillateur local à la fréquence $f_0 + \Delta f_1$, et un second mélange en quadrature avec un oscillateur local à la fréquence $f_0 + \Delta f_2$. Ce mélange peut être effectué en parallèle, c'est-à-dire avec deux mélangeurs en quadrature arrangés en parallèle (variante non représentée), ou bien séquentiellement avec un seul mélangeur en quadrature, en commutant la fréquence de l'oscillateur entre deux impulsions du signal impulsionnel. Des moyens de commande (non représentés) permettent de commander l'étage de translation de fréquence pour obtenir les première et seconde translations de fréquence.

L'étage de filtrage, 415, est réalisée au moyen de deux filtres passe-bande ou passe-bas, 416 et 417, respectivement placés sur les voies I et Q, comme indiqué sur la Fig. 4. Alternativement, il peut être réalisé à l'aide d'un filtre complexe, opérant sur le signal $I + jQ$, de manière connue en soi.

Enfin, l'étage d'intégration 420, peut être placé en aval de l'étage de conversion analogique-numérique au lieu d'être placé en amont comme indiqué en Fig.4. Dans un tel cas, les débits de données en sortie de l'étage de conversion analogique-numérique, 430, sont élevés et l'intégration se fait en mode numérique avec un grand degré de précision. Dans tous les cas, la fenêtre temporelle d'intégration est choisie pour contenir une impulsion du signal UWB, par exemple en effectuant au cours d'une phase de recherche préalable, une mesure de l'énergie reçue sur une pluralité de fenêtres temporelles successives, une fenêtre temporelle présentant un niveau d'énergie supérieure à un seuil d'énergie prédéterminé étant alors retenue. Les moyens de commande précités permettent de commander également l'étage d'intégration et notamment la ou les fenêtre(s) temporelle(s).

Le signal impulsionnel translaté à la fréquence intermédiaire $\Delta f$ au moyen du mélangeur en quadrature, peut s'exprimer sous la forme, pour la voie en phase :

$$I(t) = \frac{A}{2}.\cos\left(2\pi\Delta f\left(t - t_d\right) + \Phi\right)\exp\left(-\left(\frac{t - t_{peak} - t_d}{\tau}\right)^2\right) \qquad (9)$$

et, pour la voie en quadrature :

$$Q(t) = \frac{A}{2}.\sin\left(2\pi\Delta f\left(t - t_d\right) + \Phi\right)\exp\left(-\left(\frac{t - t_{peak} - t_d}{\tau}\right)^2\right) \qquad (10)$$

avec $\Phi = 2\pi f_0(-t_f - t_d) + \varphi - \alpha$, où $\alpha$ est la phase de l'oscillateur local.

Dans la mesure où la phase des signaux I et Q varie relativement peu pendant la durée très brève de l'impulsion UWB, les résultats d'intégration des voies I et Q en sortie de l'étage de conversion numérique-analogique peuvent être approximés par :

$$r_I = K\cos\left(-2\pi\Delta f.t_a + \Phi\right) = K\cos\left(\Theta\right) \qquad (9')$$

et

$$r_Q = K\sin\left(-2\pi\Delta f.t_a + \Phi\right) = K\sin\left(\Theta\right) \qquad (10')$$

où $K$ est une constante et $t_a = t_d - t_w$ est le temps d'arrivée du signal UWB, c'est-à-dire la position temporelle de l'impulsion UWB dans la fenêtre temporelle (la fenêtre temporelle commençant à l'instant $t_w$). On notera que dans le cas présent, la référence temporelle est choisie au début de la fenêtre temporelle d'intégration mais, bien entendu, une autre référence temporelle pourrait être choisie sans sortir du cadre de la présente invention.

Le module d'estimation d'écart de phase, 440, déduit des résultats d'intégration sur les voies I et Q, la phase du signal impulsionnel intégré sur la fenêtre :

$$\Phi - 2\pi\Delta f.t_a = Arc\tan\left(\frac{r_Q}{r_I}\right) \qquad (11)$$

On supposera que la phase $\Phi$ ne dépend pas de la fréquence intermédiaire $\Delta f$. En effet, les signaux des oscillateurs locaux étant obtenus à partir d'une même horloge mère, les valeurs de $\alpha$ pour $\Delta f_1$ et $\Delta f_2$ sont connues et l'on peut toujours se ramener au cas où elles sont identiques au moyen d'un simple déphasage prédéterminé.

Lorsque le signal fait l'objet d'une translation à une première fréquence intermédiaire, $\Delta f_1$, et à une seconde fréquence intermédiaire, $\Delta f_2$, le module d'estimation d'écart de phase estime la phase du signal impulsionnel pour la première fréquence intermédiaire et la seconde fréquence intermédiaire, soit :

$$\Theta^1 = \Phi - 2\pi\Delta f_1.t_a = Arc\tan\left(\frac{r_Q^1}{r_I^1}\right) \qquad (12\text{-}1)$$

$$\Theta^2 = \Phi - 2\pi\Delta f_2.t_a = Arc\tan\left(\frac{r_Q^2}{r_I^2}\right) \qquad (12\text{-}2)$$

On notera que les expressions (12-1) et (12-2) sont valables à un multiple de $\pi$ près. On peut alors calculer l'écart de phase :

$$\Delta\Theta = \Theta^2 - \Theta^1 = Arc\tan\left(\frac{r_Q^2}{r_I^2}\right) - Arc\tan\left(\frac{r_Q^1}{r_I^1}\right) \qquad (13)$$

cet écart de phase étant également défini à un multiple de $\pi$ près.

Le temps d'arrivée du signal UWB est alors donné par les moyens de calcul 450 :

$$t_a = \frac{\Delta\Theta}{2\pi\left(\Delta f_2 - \Delta f_1\right)} \qquad (14)$$

Si l'on choisit l'écart de fréquence $|\Delta f_2 - \Delta f_1|$ suffisamment faible, à savoir tel $\left|\Delta f_2 - \Delta f_1\right|.T_w < \frac{1}{2}$, l'estimation du temps d'arrivée à l'aide de l'expression (14) est dépourvue d'ambiguïté.

Le mode de réalisation décrit précédemment met en oeuvre un signal impulsionnel émis à une fréquence porteuse, translaté en réception, à une première fréquence intermédiaire et à une seconde fréquence intermédiaire, la translation de fréquence étant réalisée en parallèle.

Selon une variante préférée du premier mode de réalisation, le signal impulsionnel comprend au moins deux impulsions successives, de même fréquence porteuse. La première impulsion est translatée à une première fréquence intermédiaire, $\Delta f_1$, et la seconde impulsion est translatée à une seconde fréquence intermédiaire, $\Delta f_2$, à l'aide du même mélangeur en quadrature. Les fréquences $f_0 + \Delta f_1$ et $f_0 + \Delta f_2$ peuvent être générées par deux oscillateurs locaux, commutés entre les deux impulsions. Alternativement, un synthétiseur de fréquence connecté au mélangeur génère successivement $f_0 + \Delta f_1$ et $f_0 + \Delta f_2$ et les fournit au mélangeur. Après translation de fréquence, la première impulsion est intégrée dans une première fenêtre temporelle et la seconde impulsion est intégrée dans une seconde fenêtre temporelle. Les première et seconde fenêtres temporelles sont choisies pour contenir respectivement les première et seconde impulsions. De préférence, les première et seconde fenêtres temporelles sont choisies de manière à être séparées par l'intervalle temporel entre les première et seconde impulsions. On s'assure ainsi que si la première fenêtre temporelle contient la première impulsion (comme indiqué dans le premier mode de réalisation), la seconde fenêtre temporelle contient bien la seconde impulsion (le niveau d'énergie reçue dans la seconde fenêtre peut être comparé au seuil d'énergie prédéterminé pour le vérifier) et réciproquement. Là-encore les moyens de commande permettent de contrôler l'étage de translation de fréquence et l'étage d'intégration.

Dans ce cas, les expressions (12-1) et (12-2) deviennent respectivement:

$$\Phi^1 - 2\pi\Delta f_1 . t_a^1 = Arc\tan\left(\frac{r_Q^1}{r_I^1}\right) \qquad (15\text{-}1)$$

et

$$\Phi^2 - 2\pi\Delta f_1 . t_a^2 = Arc\tan\left(\frac{r_Q^2}{r_I^2}\right) \qquad (15\text{-}2)$$

où $t_a^1$ est la position temporelle de la première impulsion par rapport au début de la première fenêtre et $t_a^2$ est la position temporelle de la seconde impulsion par rapport au début de la seconde fenêtre, $\Phi^1\text{-}\Phi^2 = 2\pi f_0\Delta t_i$ où $\Delta t_i$ est l'intervalle de temps séparant les deux impulsions, supposé connu. Le cas échéant, le calcul de la phase $\Phi^1$ selon (15-1) pourra être effectué pour une première série de $N$ impulsions et les phases ainsi obtenues pourront être moyennées. De même, le calcul de la phase $\Phi^2$ pourra être effectué pour une seconde série de $N$ impulsions et les phases obtenues pourront être également moyennées. Dans ce cas $\Delta t_i$ représente l'intervalle de temps séparant les deux séries d'impulsions. Les première et seconde séries d'impulsion peuvent être successives ou bien entrelacées.

Etant donné que $\delta t_{21} = t_a^2 - t_a^1 = \Delta t_i - \Delta t_w$ où $\Delta t_w$ est l'intervalle de temps séparant les première et seconde fenêtres temporelles, il est possible de calculer le temps d'arrivée du signal UWB, à partir de :

$$t_a = \frac{\Delta\Theta - 2\pi f_0\Delta t_i - 2\pi\Delta f_2\delta t_{21}}{2\pi\left(\Delta f_2 - \Delta f_1\right)} \qquad (16)$$

où le temps d'arrivée du signal UWB est compté ici par rapport au début de la première fenêtre temporelle. Dans le cas particulier où l'intervalle de temps entre les impulsions est un multiple entier de la période de la porteuse et où l'intervalle de temps entre les fenêtres temporelles est égal à l'intervalle de temps entre les impulsions ($\delta t_{21}$ =0), on retrouve une évaluation du temps d'arrivée selon l'expression simplifiée (14).

Selon un second mode de réalisation de l'invention, le signal impulsionnel comprend des impulsions émises à au moins deux fréquences centrales différentes, dénommées ci-après première et seconde fréquences. On supposera que la première fréquence est $f_0 + \Delta f_1$ et que la seconde fréquence est $f_0 + \Delta f_2$. Différentes séquences d'impulsions sont envisageables : par exemple le signal impulsionnel peut comprendre une première série d'impulsions à la première fréquence suivie d'une seconde série d'impulsions à la seconde fréquence. Alternativement, les première et seconde séries peuvent être entrelacées.

Le récepteur présente la même architecture que celle de la Fig. 4 avec un mélangeur en quadrature unique à la fréquence $f_0$. Les impulsions à la première fréquence sont translatées à la première fréquence intermédiaire $\Delta f_1$ et les impulsions à la seconde fréquence sont translatées à la seconde fréquence intermédiaire $\Delta f_2$. On considérera dans la suite une première impulsion à une première fréquence et une seconde impulsion à une seconde fréquence.

Les première et seconde fréquences sont choisies dans les bandes de fréquence autorisées pour le système UWB en question. Par exemple, si le système UWB est conforme à la norme IEEE 802.15.4a, on pourra utiliser des première et seconde fréquences appartenant à des canaux distincts de cette norme.

Avantageusement, on choisira $\Delta f_2 = -\Delta f_1$, autrement dit la fréquence de mélange $f_0$ sera sélectionnée comme la fréquence médiane des première et seconde fréquences.

Comme dans la variante du premier mode de réalisation, la première impulsion est intégrée dans une première fenêtre temporelle et la seconde impulsion est intégrée dans une seconde fenêtre temporelle. Les première et seconde fenêtres temporelles sont choisies pour contenir respectivement les première et seconde impulsions, comme expliqué précédemment.

Le résultat d'intégration dans la première fenêtre temporelle est à nouveau noté $r_I^1$ pour la voie en phase et $r_Q^1$ pour la voie en quadrature. De même, le résultat d'intégration dans la seconde fenêtre est noté $r_I^2$ pour la voie en phase et $r_Q^2$ pour la voie en quadrature.

Là-encore, les moyens de commandes permettent de contrôler l'étage de translation de fréquence et l'étage d'intégration.

La phase du résultat d'intégration pour la première impulsion est par conséquent:

$$\Theta^1 = Arc\tan\left(\frac{r_Q^1}{r_I^1}\right) = \Phi^1 + 2\pi\Delta f_1 t_a^1 \tag{17}$$

et celle du résultat d'intégration pour la seconde impulsion :

$$\Theta^2 = Arc\tan\left(\frac{r_Q^2}{r_I^2}\right) = \Phi^2 + 2\pi\Delta f_2 t_a^2 \tag{18}$$

où $\Phi^1$-$\Phi^2$ $=2\pi f_0\Delta t_i+\Delta\varphi$ avec les mêmes conventions de notation que précédemment et où $\Delta\varphi$ est l'écart entre la phase d'émission de la première impulsion et la phase d'émission de la seconde impulsion.

On suppose dans la suite que l'intervalle de temps entre les première et seconde fenêtres temporelles est choisi égal à l'intervalle de temps entre les première et second impulsions ($\delta t_{21}$ =0 et donc $t_a^1 = t_a^2 = t_a$ ). ).

A partir du temps d'arrivée du signal UWB, $t_a$, le récepteur peut déterminer le temps de propagation entre l'émetteur et le récepteur dès lors que ceux-ci sont synchronisés, autrement dit lorsque le récepteur connait le temps d'émission du signal UWB.

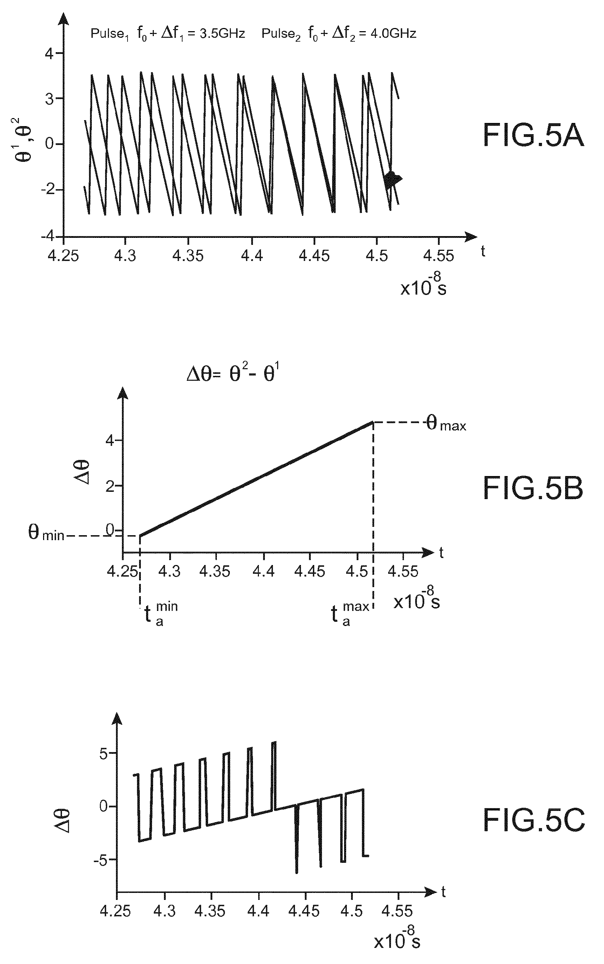

La Fig. 5A illustre la variation de la phase $\Theta^1$ et de la phase $\Theta^2$ sur une plage de temps d'arrivée. La première fréquence $f_0+\Delta f_1$ est ici de 3.5 GHz et la seconde fréquence $f_0+\Delta f_2$ et de 4 GHz. On note que les variations de phase sont rapides pour une variation de temps de temps d'arrivée aussi faible que 3 ns.

La Fig. 5B illustre l'écart de phase $\Delta\Theta = \Theta^2 - \Theta^1$ sur cette même plage de temps de temps d'arrivée. On remarque que l'écart de phase évolue de manière linéaire avec le temps comme le prévoient les expressions (17) et (18).

A défaut de connaître $\Delta\varphi$, on effectue une calibration de l'estimateur de temps d'arrivée. Plus précisément, on enregistre un premier écart de phase, $\Delta\Theta_{min} = \Theta_{min}^2 - \Theta_{min}^1$ , pour un premier temps d'arrivée, $t_a^{min}$ , et un second écart de phase, $\Delta\Theta_{max} = \Theta_{max}^2 - \Theta_{max}^1$ , pour un second temps d'arrivée, $t_a^{max}$ . On pose $\Delta T = t_a^{max} - t_a^{min}$ .

Si l'on suppose que la variation de l'écart de phase est linéaire sur l'intervalle $\left[ t_a^{min}, t_a^{max} \right]$, le temps d'arrivée est estimé en 440 par :

$$t_a = t_a^{min} + \frac{\Delta\Theta - \Delta\Theta_{min}}{\Delta\Theta_{max} - \Delta\Theta_{min}}\Delta T \tag{19}$$

L'hypothèse de linéarité de l'écart de phase sur l'intervalle $\left[ t_a^{min}, t_a^{max} \right]$ est vérifiée si la rotation de l'écart de phase sur cet intervalle est inférieure à $\pi$. On comprend des équations (17) et (18) que ce sera le cas si l'intervalle est de courte durée et/ou si l'écart de fréquence $\Delta f_2 - \Delta f_1$ est faible.

Dans le cas contraire, la courbe de l'écart de phase présente périodiquement des sauts de phase de $\pi$ avec une périodicité $1/2|\Delta f_2 - \Delta f_1|$ au sein de l'intervalle en question. Il en résulte une ambiguïté sur le temps d'arrivée ou, de manière équivalente, sur le temps de propagation entre l'émetteur et le récepteur. Cette ambiguïté peut être levée de différentes façons, par exemple au moyen d'une étape préalable de synchronisation grossière, ou bien, au moyen d'une mesure de puissance donnant une information grossière du temps de la distance de propagation et, partant, du temps d'arrivée.

La calibration de la courbe d'écart de phase peut être réalisée à l'aide de deux mesures $\Delta\Theta_{min}$ et $\Delta\Theta_{max}$ comme indiqué précédemment.

En pratique, on peut effectuer une statistique sur les valeurs de $\Delta\Theta$, en absence ou avant toute synchronisation du récepteur avec l'émetteur. Alternativement, on peut analyser les valeurs de $\Delta\Theta$ pendant une phase durant laquelle on fait glisser les fenêtres d'intégration par rapport à la première impulsion et à la seconde impulsion respectivement, les valeurs de $\Delta\Theta$ étant alors enregistrées en fonction de ce glissement, c'est-à-dire en parcourant la courbe d'écart de phase en fonction du temps d'arrivée.

## Revendications

1. Dispositif de détermination du temps d'arrivée d'un signal UWB comprenant au moins une impulsion modulée à une fréquence porteuse, ledit dispositif comprenant :

   - au moins un étage de translation à une fréquence intermédiaire (410) comprenant un mélangeur en quadrature comprenant deux voies de mélange I et Q;
   - au moins un étage d'intégration (420) relié à un étage de translation, pour intégrer les signaux délivrés sur les voies I et Q sur une fenêtre temporelle et fournir respectivement des résultats d'intégrations pour chacune des voies I et Q; et
   - des moyens de commande desdits au moins un étage de translation et de d'intégration pour:

      o réaliser une première translation de fréquence du signal UWB à une première fréquence intermédiaire suivie d'une intégration du signal ainsi translaté sur une première fenêtre temporelle pour obtenir des premiers résultats d'intégration $r_I^1, r_Q^1$ ;

      o réaliser une seconde translation de fréquence du signal UWB à une seconde fréquence intermédiaire, différente de la première fréquence intermédiaire, suivie d'une intégration du signal ainsi translaté sur une seconde fenêtre temporelle pour obtenir des seconds résultats d'intégration $r_I^2, r_Q^2$ ;

   - des moyens de calcul (440, 450) pour calculer une première valeur de phase $\Theta^1$ à partir des premiers résultats d'intégration selon $\Theta^1 = Arc\tan\left(\dfrac{r_Q^1}{r_I^1}\right)$, une seconde valeur de phase $\Theta^2$ à partir des seconds résultats d'intégration selon $\Theta^2 = Arc\tan\left(\dfrac{r_Q^2}{r_I^2}\right)$ et en déduire un écart de phase $\Delta\Theta = \Theta^2 - \Theta^1$, lesdits moyens de calcul déterminant le temps d'arrivée du signal UWB à partir de l'écart de phase ainsi obtenu au moyen d'une fonction prédéterminée.

2. Dispositif selon la revendication 1, **caractérisé en ce que** les première et seconde fenêtres temporelles sont confondues en une fenêtre unique et que celle-ci est choisie pour contenir ladite impulsion.

3. Dispositif selon la revendication 2, **caractérisé en ce que** ledit temps d'arrivée, compté à partir du début de la fenêtre unique, est estimé par :

$$t_a = \frac{\Delta\Theta}{2\pi\left(\Delta f_2 - \Delta f_1\right)}$$

où $\Delta\Theta$ est l'écart de phase, $\Delta f_1$ est la première fréquence intermédiaire et $\Delta f_2$ est la seconde fréquence intermédiaire.

4. Dispositif selon la revendication 1, **caractérisé en ce que** ledit signal UWB comprend une première impulsion suivie d'une seconde impulsion, que la première fenêtre temporelle est choisie pour comprendre la première impulsion et la seconde fenêtre temporelle est choisie pour comprendre la seconde impulsion.

**5.** Dispositif selon la revendication 4, **caractérisé en ce que** ledit temps d'arrivée, compté à partir du début de la première fenêtre temporelle est estimé par :

$$t_a = \frac{\Delta\Theta - 2\pi f_0 \Delta t_i - 2\pi \Delta f_2 \delta t_{21}}{2\pi(\Delta f_2 - \Delta f_1)}$$

où $\Delta\Theta$ est l'écart de phase, $f_0$ est la fréquence porteuse, $\Delta f_1$ est la première fréquence intermédiaire, $\Delta f_2$ est la seconde fréquence intermédiaire, $\Delta t_i$ est l'intervalle de temps séparant les deux impulsions, $\delta t_{21} = \Delta t_i - \Delta t_w$ où $\Delta t_w$ est l'intervalle de temps séparant les première et seconde fenêtres temporelles.

**6.** Dispositif de détermination du temps d'arrivée d'un signal UWB comprenant une première impulsion modulée à une fréquence porteuse, suivie d'une seconde impulsion modulée à une seconde fréquence porteuse, ledit dispositif comprenant :

- un étage de translation à une fréquence intermédiaire (410) comprenant un mélangeur en quadrature comprenant deux voies de mélange I et Q;
- un étage d'intégration (420) relié au dit étage de translation, pour intégrer les signaux délivrés sur les voies I et Q sur une fenêtre temporelle et fournir respectivement des résultats d'intégrations pour chacune des voies I et Q; et
- des moyens de commande de l'étage de translation et de l'étage d'intégration pour:

  ◦ réaliser une première translation de fréquence du signal UWB à une fréquence intermédiaire suivie d'une intégration du signal ainsi translaté sur une première fenêtre temporelle pour obtenir des premiers résultats d'intégration $r_I^1, r_Q^1$ ;

  ◦ réaliser une seconde translation de fréquence du signal UWB à ladite fréquence intermédiaire, suivie d'une intégration du signal ainsi translaté sur une seconde fenêtre temporelle pour obtenir des seconds résultats d'intégration $r_I^2, r_Q^2$ ;

- des moyens de calcul (440, 450) pour calculer une première valeur de phase $\Theta^1$ à partir des premiers résultats d'intégration selon $\Theta^1 = Arc\tan\left(\dfrac{r_Q^1}{r_I^1}\right)$, une seconde valeur de phase $\Theta^2$ à partir des seconds résultats d'intégration selon $\Theta^2 = Arc\tan\left(\dfrac{r_Q^2}{r_I^2}\right)$ et en déduire un écart de phase $\Delta\Theta = \Theta^2 - \Theta^1$, lesdits moyens de calcul déterminant le temps d'arrivée du signal UWB à partir de l'écart de phase ainsi obtenu au moyen d'une fonction prédéterminée.

**7.** Dispositif selon la revendication 6, **caractérisé en ce que** la fréquence intermédiaire est la fréquence médiane entre les première et seconde fréquences porteuses.

**8.** Dispositif selon la revendication 4 ou 6, **caractérisé en ce que** l'intervalle de temps entre les première et seconde fenêtres temporelles est choisi égal à l'intervalle de temps entre les première et seconde impulsions, le temps d'arrivée du signal UWB, compté à partir du début de la première fenêtre temporelle étant estimé par :

$$t_a = t_a^{\min} + \frac{\Delta\Theta - \Delta\Theta_{\min}}{\Delta\Theta_{\max} - \Delta\Theta_{\min}}\Delta T$$

où $\Delta\Theta_{\min}$ et $\Delta\Theta_{\max}$ sont respectivement des écarts de phase obtenus pour un premier temps d'arrivée $t_a^{\min}$ et un second temps d'arrivée $t_a^{\max}$, et $\Delta T = t_a^{\max} - t_a^{\min}$.

9. Dispositif selon la revendication 1 ou 6, **caractérisé en ce que** la fonction prédéterminée est donnée par une courbe de calibration fournissant l'écart de phase en fonction du temps d'arrivée du signal.

10. Dispositif de détermination du temps d'arrivée d'un signal UWB entre un émetteur et un récepteur selon la revendication 9, **caractérisé en ce que** la courbe est obtenue au moyen d'une statistique des valeurs d'écarts de phase en fonction du temps d'arrivée du signal, en absence de synchronisation de l'émetteur et du récepteur.

**Patentansprüche**

1. Vorrichtung zur Bestimmung der Ankunftszeit eines UWB-Signals, das wenigstens einen mit einer Trägerfrequenz modulierten Puls enthält, wobei die Vorrichtung umfasst:

   - wenigstens eine Stufe zum Umsetzen auf eine Zwischenfrequenz (410), umfassend einen Quadraturmischer, der zwei Mischkanäle I und Q umfasst;
   - wenigstens eine mit der Umsetzstufe verbundene Integrationsstufe (420) zum Integrieren der auf den Kanälen I und Q gelieferten Signale über ein Zeitfenster und zum Liefern der jeweiligen Integrationsresultate für jeden der Kanäle I und Q; und
   - Mittel zur Steuerung der wenigstens einen Umsetzstufe und Integrationsstufe zum:

     ○ Realisieren einer ersten Frequenzumsetzung des UWB-Signals auf eine erste Zwischenfrequenz, gefolgt von einer Integration des derart umgesetzten Signals über ein erstes Zeitfenster, um erste Integrationsresultate $r_I^1, r_Q^1$ zu erhalten;
     ○ Realisieren einer zweiten Frequenzumsetzung des UWB-Signals auf eine zweite Zwischenfrequenz, die von der ersten Zwischenfrequenz verschieden ist, gefolgt von einer Integration des derart umgesetzten Signals über ein zweites Zeitfenster, um zweite Integrationsresultate $r_I^2, r_Q^2$ zu erhalten;

   - Rechenmittel (440, 450) zum Berechnen eines ersten Phasenwerts $\Theta^1$ ausgehend von den ersten Integrationsresultaten gemäß $\Theta^1 = Arc\tan\left(\dfrac{r_Q^1}{r_I^1}\right)$, eines zweiten Phasenwerts $\Theta^2$ ausgehend von den zweiten Integrationsresultaten gemäß $\Theta^2 = Arc\tan\left(\dfrac{r_Q^2}{r_I^2}\right)$ und zum Ableiten einer Phasenverschiebung $\Delta\Theta = \Theta^2 - \Theta^1$ hieraus, wobei die Rechenmittel die Ankunftszeit des UWB-Signals ausgehend von der derart erhaltenen Phasenverschiebung mit Hilfe einer vorbestimmten Funktion bestimmen.

2. Vorrichtung nach Anspruch 1, **dadurch gekennzeichnet, dass** das erste und das zweite Zeitfenster sich zu einem einzigen Fenster überlappen, und dass dieses so gewählt ist, dass es den Puls enthält.

3. Vorrichtung nach Anspruch 2, **dadurch gekennzeichnet, dass** die Ankunftszeit, gerechnet ab dem Beginn des einzigen Fensters, abgeschätzt wird durch:

$$t_a = \frac{\Delta\Theta}{2\pi\left(\Delta f_2 - \Delta f_1\right)}$$

wobei $\Delta\Theta$ die Phasenverschiebung ist, $\Delta f_1$ die erste Zwischenfrequenz ist, und $\Delta f_2$ die zweite Zwischenfrequenz ist.

4. Vorrichtung nach Anspruch 1, **dadurch gekennzeichnet, dass** das UWB-Signal einen ersten Puls gefolgt von einem zweiten Puls enthält, dass das erste Zeitfenster derart gewählt ist, dass es den ersten Puls enthält, und dass das zweite Zeitfenster derart gewählt ist, dass es den zweiten Puls enthält.

5. Vorrichtung nach Anspruch 4, **dadurch gekennzeichnet, dass** die Ankunftszeit, gerechnet ab dem Beginn des ersten Zeitfensters, abgeschätzt ist durch:

$$t_a = \frac{\Delta\Theta - 2\pi f_0 \Delta t_i - 2\pi \Delta f_2 \delta t_{21}}{2\pi \left( \Delta f_2 - \Delta f_1 \right)}$$

wobei $\Delta\Theta$ die Phasenverschiebung ist, $f_0$ die Trägerfrequenz ist, $\Delta f_1$ die erste Zwischenfrequenz ist, $\Delta f_2$ die zweite Zwischenfrequenz ist, $\Delta t_i$ das Zeitintervall ist, das die zwei Pulse trennt, $\delta t_{21} = \Delta t_i - \Delta t_w$, wobei $\Delta t_w$ das Zeitintervall ist, das das erste und das zweite Zeitfenster voneinander trennt.

6.  Vorrichtung zur Bestimmung der Ankunftszeit eines UWB-Signals, das einen ersten Puls enthält, der mit einer Trägerfrequenz moduliert ist, gefolgt von einem zweiten Puls, der mit einer zweiten Trägerfrequenz moduliert ist, wobei die Vorrichtung umfasst:

    - eine Stufe zum Umsetzen auf eine Zwischenfrequenz (410), umfassend einen Quadraturmischer, der zwei Mischkanäle I und Q umfasst;
    - eine mit der Umsetzstufe verbundene Integrationsstufe (420) zum Integrieren der auf den Kanälen I und Q gelieferten Signale über ein Zeitfenster und zum Liefern jeweiliger Integrationsresultate für jeden der Kanäle I und Q; und
    - Mittel zum Steuern der Umsetzstufe und der Integrationsstufe zum:

        ◦ Realisieren einer ersten Frequenzumsetzung des UWB-Signals auf eine Zwischenfrequenz, gefolgt von einer Integration des derart umgesetzten Signals über ein erstes Zeitfenster, um erste Integrationsresultate $r_I^1, r_Q^1$ zu erhalten;
        ◦ Realisieren einer zweiten Frequenzumsetzung des UWB-Signals auf die Zwischenfrequenz, gefolgt von einer Integration des derart umgesetzten Signals über ein zweites Zeitfenster, um zweite Integrationsresultate $r_I^2, r_Q^2$ zu erhalten;

    - Rechenmittel (440, 450) zum Berechnen eines ersten Phasenwerts $\Theta^1$ ausgehend von den ersten Integrationsresultaten gemäß $\Theta^1 = Arc\tan\left(\dfrac{r_Q^1}{r_I^1}\right)$, eines zweiten Phasenwerts $\Theta^2$ ausgehend von den zweiten Integrationsresultaten gemäß $\Theta^2 = Arc\tan\left(\dfrac{r_Q^2}{r_I^2}\right)$ und zum Ableiten einer Phasenverschiebung $\Delta\Theta = \Theta^2 - \Theta^1$ hieraus, wobei die Rechenmittel die Ankunftszeit des UWB-Signals ausgehend von der derart erhaltenen Phasenverschiebung mit Hilfe einer vorbestimmten Funktion bestimmen.

7.  Vorrichtung nach Anspruch 6, **dadurch gekennzeichnet, dass** die Zwischenfrequenz die Mittelfrequenz zwischen der ersten und der zweiten Trägerfrequenz ist.

8.  Vorrichtung nach Anspruch 4 oder 6, **dadurch gekennzeichnet, dass** das Zeitintervall zwischen dem ersten und dem zweiten Zeitfenster gleich dem Zeitintervall zwischen dem ersten und dem zweiten Puls gewählt ist, wobei die Ankunftszeit des UWB-Signals, gerechnet ab dem Beginn des ersten Zeitfensters, abgeschätzt ist durch:

$$t_a = t_a^{\min} + \frac{\Delta\Theta - \Delta\Theta_{\min}}{\Delta\Theta_{\max} - \Delta\Theta_{\min}} \Delta T$$

wobei $\Delta\Theta_{\min}$ und $\Delta\Theta_{\max}$ Phasenverschiebungen sind, die für eine erste Ankunftszeit $t_a^{\min}$ beziehungsweise für eine zweite Ankunftszeit $t_a^{\max}$ erhalten werden, und $\Delta T = t_a^{\max} - t_a^{\min}$.

9.  Vorrichtung nach Anspruch 1 oder 6, **dadurch gekennzeichnet, dass** die vorbestimmte Funktion durch eine Kalibrationskurve gegeben ist, die die Phasenverschiebung als Funktion der Ankunftszeit des Signals liefert.

10. Vorrichtung zur Bestimmung der Ankunftszeit eines UWB-Signals zwischen einem Sender und einem Empfänger nach Anspruch 9, **dadurch gekennzeichnet, dass** die Kurve erhalten ist mit Hilfe einer Statistik der Phasenverschiebungswerte als Funktion der Ankunftszeit des Signals in Abwesenheit einer Synchronisation des Senders und des Empfängers.

**Claims**

1. A device for determining the arrival time of a UWB signal comprising at least one pulse modulated at a carrier frequency, said device comprising:

   - at least one translation stage for translating to an intermediate frequency (410) comprising a quadrature mixer comprising two I and Q mixing channels;
   - at least one integration stage (420) connected to a translation stage, for integrating the signals delivered on the I and Q channels on a time window and providing integration results for each of the I and Q channels respectively; and
   - means for controlling said at least one translation and integration stage for:

     ∘ carrying out a first frequency translation of the UWB signal to a first intermediate frequency followed by an integration of the signal thus translated on a first time window to obtain first integration results $r_I^1, r_Q^1$ ;

     o carrying out a second frequency translation of the UWB signal to a second intermediate frequency, different from the first intermediate frequency, followed by an integration of the signal thus translated on a second time window to obtain second integration results $r_I^2, r_Q^2$ ;

   - calculating means (440, 450) for calculating a first phase value $\Theta^1$ from the first integration results according

   to $\Theta^1 = Arc\tan\left(\dfrac{r_Q^1}{r_I^1}\right)$ , a second phase value $\Theta^2$ from the second integration results according to

   $$\Theta^2 = Arc\tan\left(\dfrac{r_Q^2}{r_I^2}\right)$$ and deducing therefrom a phase deviation $\Delta\Theta = \Theta^2 - \Theta^1$, said calculating means determining the arrival time of the UWB signal from the phase deviation thus obtained by means of a predetermined function.

2. The device according to claim 1, **characterized in that** the first and second time windows are combined in a single window and **in that** the latter is chosen to contain said pulse.

3. The device according to claim 2, **characterized in that** said arrival time, counted from the beginning of the single window, is estimated by:

$$t_a = \frac{\Delta\Theta}{2\pi\left(\Delta f_2 - \Delta f_1\right)}$$

where $\Delta\Theta$ is the phase deviation, $\Delta f_1$ is the first intermediate frequency and $\Delta f_2$ is the second intermediate frequency.

4. The device according to claim 1, **characterized in that** said UWB signal comprises a first pulse followed by a second pulse, **in that** the first time window is chosen to comprise the first pulse and the second time window is chosen to comprise the second pulse.

5. The device according to claim 4, **characterized in that** said arrival time, counted from the beginning of the first time window is estimated by:

$$t_a = \frac{\Delta\Theta - 2\pi f_0 \Delta t_i - 2\pi\Delta f_2 \delta t_{21}}{2\pi\left(\Delta f_2 - \Delta f_1\right)}$$

where $\Delta\Theta$ is the phase deviation, $f_0$ is the carrier frequency, $\Delta f_1$ is the first intermediate frequency, $\Delta f_2$ is the second intermediate frequency, $\Delta t_i$ is the time interval separating both pulses, $\delta t_{21} = \Delta t_i - \Delta t_w$ where $\Delta t_w$ is the time interval separating the first and second time windows.

6. A device for determining the arrival time of a UWB signal comprising a first pulse modulated at a carrier frequency, followed by a second pulse modulated at a second carrier frequency, said device comprising:

- a translation stage for translating to an intermediate frequency (410) comprising a quadrature mixer comprising two I and Q mixing channels;
- an integration stage (420) connected to said translation stage, for integrating the signals delivered on the I and Q channels on a time window and providing integration results for each of the I and Q channels respectively; and
- means for controlling the translation stage and the integration stage for:

    ◦ carrying out a first frequency translation of the UWB signal at an intermediate frequency followed by an integration of the signal thus translated on a first time window to obtain first integration results $r_I^1, r_Q^1$ ;

    ◦ carrying out a second frequency translation of the UWB signal to said intermediate frequency, followed by an integration of the signal thus translated on a second time window to obtain second integration results $r_I^2, r_Q^2$ ;

- calculating means (440, 450) for calculating a first phase value $\Theta^1$ from the first integration results according to $\Theta^1 = Arc\tan\left(\dfrac{r_Q^1}{r_I^1}\right)$, a second phase value $\Theta^2$ from the second integration results according to $\Theta^2 = Arc\tan\left(\dfrac{r_Q^2}{r_I^2}\right)$ and deducing therefrom a phase deviation $\Delta\Theta = \Theta^2 - \Theta^1$, said calculating means determining the arrival time of the UWB signal from the phase deviation thus obtained by means of a predetermined function.

7. The device according to claim 6, **characterized in that** the intermediate frequency is the median frequency between the first and second carrier frequencies.

8. The device according to claim 4 or 6, **characterized in that** the time interval between the first and second time windows is selected equal to the time interval between the first and second pulses, the arrival time of the UWB signal, counted from the beginning of the first time window being estimated by:

$$t_a = t_a^{\min} + \frac{\Delta\Theta - \Delta\Theta_{\min}}{\Delta\Theta_{\max} - \Delta\Theta_{\min}}\Delta T$$

where $\Delta\Theta_{\min}$ and $\Delta\Theta_{\max}$ are phase deviations obtained for a first arrival time $t_a^{\min}$ and a second arrival time $t_a^{\max}$, respectively, and $\Delta T = t_a^{\max} - t_a^{\min}$ .

9. The device according to claim 1 or 6, **characterized in that** the predetermined function is given by a calibration curve providing the phase deviation as a function of the arrival time of the signal.

10. The device for determining the arrival time of a UWB signal between a transmitter and a receiver according to claim 9, **characterized in that** the curve is obtained by means of a statistics of the phase deviation values as a function of the arrival time of the signal, in the absence of synchronization of the transmitter and the receiver.

FIG.1A

FIG.1B

FIG.2

EP 2 938 002 B1

FIG.3

FIG.4

Pulse$_1$ f$_0$ + $\Delta$f$_1$ = 3.5GHz    Pulse$_2$ f$_0$ + $\Delta$f$_2$ = 4.0GHz

FIG.5A

$\Delta\theta$ = $\theta^2$ - $\theta^1$

FIG.5B

FIG.5C

22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1580901 A

**Littérature non-brevet citée dans la description**

- Double-Quadrature UWB Receiver for Wide-Range Localization Applications With Sub-cm Ranging Precision. **MORCHE DOMINIQUE et al.** IEEE JOURNAL OF SOLID-STATE CIRCUITS. IEEE SERVICE CENTER, 01 Octobre 2013, vol. 48

- **G. MASSON et al.** A 1 nJ/b 3.2 to 4.7 GHz UWB 50 Mpulses/s double quadrature receiver for communication and localization. *Proc. of the ESSCIRC 2010,* 14 Septembre 2010, 502-505